# FASCICULE DE BREVET EUROPEEN

(11) **EP 0 848 982 B1**
(45) Date de publication et mention de la délivrance du brevet: **24.03.2004**
(21) Numéro de dépôt: 97402912.6
(22) Date de dépôt: 03.12.1997
(51) Int. Cl.: B01D 53/14

(54) **Procédé et dispositif de traitement d'un gaz par refrigeration et mise en contact avec un solvant**
Verfahren und Vorrichtung zur Gasbehandlung durch Kühlen und Berührung mit einem Lösungsmittel
Method and apparatus for treating a gas by refrigeration and contacting with a solvent

(30) Priorité: 19.12.1996 FR 9616328
(43) Date de publication de la demande: 24.06.1998
(73) Titulaire: Institut Français du Pétrole, 92852 Rueil-Malmaison Cedex (FR)
(72) Inventeur: Lebas, Etienne, 92500 Rueil Malmaison (FR); Rojey, Alexandre, 92500 Rueil Malmaison (FR)

(56) Documents cités:
- EP-A- 0 707 880
- FR-A- 2 550 956
- US-A- 3 824 766
- US-A- 4 528 002

## Description

La présente invention concerne un procédé et une installation de traitement d'un gaz comportant des constituants non désirables et notamment le traitement d'un gaz naturel afin d'éliminer tout ou au moins la majorité des constituants pouvant être nuisibles à son transport ou à son utilisation.

Un gaz produit dans une installation industrielle, par exemple issue d'une raffinerie, peut comporter des constituants qui sont considérés comme indésirables lors de leur transport et/ou de leur utilisation. De tels constituants sont par exemple, mais de manière non limitative, des gaz acides tels que le CO₂, ou l'H₂S ou encore un gaz inerte tel que l'azote.

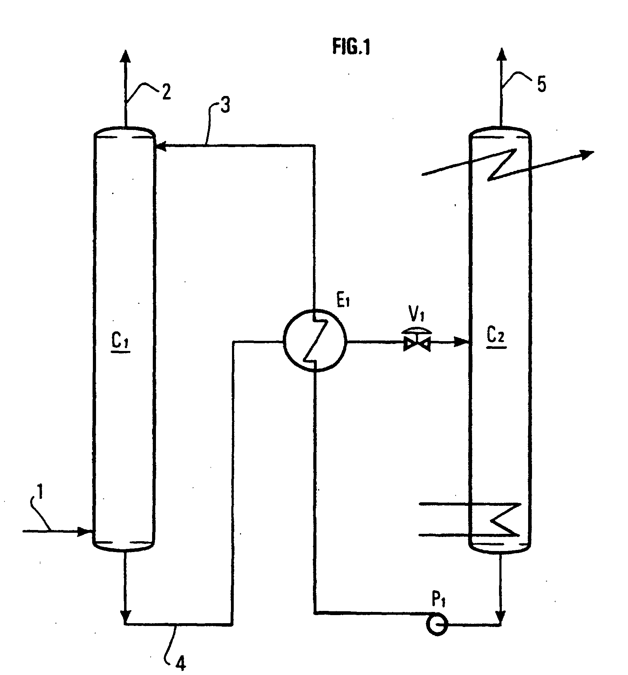

Un mode de traitement couramment utilisé consiste à réaliser une étape d'absorption en mettant le gaz à traiter en contact à contre-courant avec un solvant dans une colonne, le solvant permettant notamment d'extraire sélectivement un ou plusieurs constituants contenus dans le gaz, puis à régénérer le solvant par une distillation à pression réduite. Un tel mode de fonctionnement, détaillé à la figure 1 est plus particulièrement adapté pour éliminer des impuretés ou tout au moins pour séparer un ou plusieurs constituants présents en relativement faible teneur dans le gaz. Il consiste à prérefroidir le gaz à traiter et à utiliser un solvant à basse température pour réaliser l'étape d'absorption. Toutefois, un tel procédé peut devenir coûteux lorsque la teneur des constituants devient élevée, du fait de la nécessité de faire circuler et de distiller des quantités importantes de solvant fortement chargé en constituants à séparer du gaz traité. En effet et de manière générale, la distillation du solvant est une opération relativement coûteuse qui nécessite de chauffer la colonne en fond et de la réfrigérer en tête.

Il a été découvert un nouveau mode de traitement du gaz palliant les inconvénients de l'art antérieur et qui permet notamment de diminuer le coût de traitement du solvant et la quantité nécessaire pour traiter le gaz. Un tel procédé est particulièrement bien adapté lorsque le ou les constituants du gaz est ou sont présents à des teneurs relativement élevées.

Le procédé selon l'invention consiste notamment à réaliser dans une même zone d'échange l'absorption des constituants contenus dans le gaz et la régénération du solvant utilisé pour absorber les constituants.

Ainsi la présente invention concerne un procédé de traitement d'un gaz G comportant un ou plusieurs constituants A à éliminer, dans lequel on effectue les étapes suivantes :
(a) on mélange le gaz à traiter G au moins en partie avec un solvant S choisi pour retenir sélectivement au moins un des constituants à séparer, ledit solvant S provenant au moins en partie de l'étape (f),
(b) on refroidit le mélange de gaz G et de solvant S en le faisant circuler à l'intérieur d'au moins une zone d'échange de chaleur de manière à obtenir en sortie de ladite zone d'échange de chaleur, au moins une phase gazeuse G₁ appauvrie en au moins un des constituants A à séparer et une phase solvant S₁ enrichie en constituants à séparer,
(c) on sépare ladite phase solvant enrichie S₁ de ladite phase gazeuse G₁,
(d) on détend ladite phase solvant enrichie S₁ issue de l'étape (c) pour obtenir une phase solvant détendue,
   Le procédé selon l'invention est caractérisé en ce qu'on effectue en outre les étapes:
(e) on recycle ladite phase solvant détendue dans la zone d'échange de chaleur pour refroidir ledit mélange de gaz et de solvant (étape b), ladite phase solvant S₁ étant en sortie de la zone d'échange de chaleur formée d'au moins une phase gazeuse G₂ enrichie en constituants A à séparer et d'une phase solvant liquide S, et
(f) on sépare la phase gazeuse G₂ et la phase solvant liquide S issues de l'étape (e) et on recycle la phase solvant au moins partiellement épurée du ou des constituants A à séparer vers l'étape (a).

Le mélange gaz-solvant et la phase solvant détendue utilisée comme agent de réfrigération, circulent par exemple à l'intérieur de la zone d'échange de chaleur à contre-courant.

Selon un mode de mise en oeuvre du procédé, on refroidit au moins une partie de la phase gazeuse G₁ issue de l'étape (c), de préférence par détente à travers une turbine T₁, et on l'envoie, par exemple, dans la zone d'échange de chaleur pour refroidir le mélange gaz-solvant.

Selon un mode de réalisation on envoie, par exemple, au moins une partie de ladite phase solvant S issue de l'étape (e) vers une étape de régénération complémentaire réalisée par détente et/ ou chauffage et/ou distillation.

A l'issue de l'étape (e), on sépare, par exemple, une première fraction gazeuse de la phase solvant par détente et/ou chauffage pour enrichir la phase solvant en constituants A.

Le procédé selon l'invention opère, par exemple dans des gammes de température en sortie de l'étape (b) comprise, par exemple, entre -20°C et -100°C.

Selon un mode de mise en oeuvre du procédé, on effectue au moins les étapes (b), (c), (d) et (e) sur plusieurs opérations réalisées dans des zones de contact, la phase gazeuse G₁ obtenue à 1 sortie de la zone de contact i étant envoyée à la zone de contact suivante i+1 et la phase gazeuse G₂ enrichie en constituants étant envoyée à la zone de contact précédente Ci-1.

Le procédé s'applique par exemple pour le traitement d'un gaz comportant au moins des gaz acides, la phase gazeuse G₁ appauvrie en constituants comportant au moins un des gaz acide tel que le dioxyde de carbone CO₂ ou l'hydrogène sulfuré H₂S, et dans lequel on utilise, par exemple, comme solvant S mélangé avec le gaz à traiter, un solvant physique tel qu'un alcool, tel que le méthanol ou l'éthanol, un éther tel que le méthylpropyléther, l'éthylpropyléther, le méthyltertiobutyléther ou encore le carbonate de propylène ou le méthoxyéthanol.

Il est aussi possible d'appliquer le procédé pour traiter un gaz comportant, par exemple au moins de l'hydrogène et ou de l'azote, la fraction séparée du gaz traité comportant, par exemple, au moins un hydrocarbure tel que le méthane, l'éthane, le propane, le butane et/ou le pentane, le gaz à traiter comportant au moins de l'hydrogène et de l'azote.

Selon un autre mode d'application, le gaz à traiter comporte par exemple de l'eau, on utilise par exemple un solvant miscible à l'eau tel que le méthanol et avant d'effectuer l'étape (a) ou l'étape (b), on sépare ledit gaz à traiter en une première fraction F₁ et une seconde fraction F₂, on met en contact dans une zone de contact C₃ à contre-courant une fraction de la phase solvant liquide S₁ issue de l'étape (b) avec au moins la première fraction du gaz à traiter, en soutirant de ladite zone de contact C₃ par exemple un gaz chargé en solvant, qui est par exemple ensuite mélangé avec la seconde fraction F₂ et envoyé à l'étape (a) et on extrait de ladite zone de contact C₃ une phase aqueuse substantiellement débarrassée de solvant.

Par rapport aux différents procédés utilisés et décrits dans l'art antérieur, le procédé selon l'invention offre notamment les avantages suivants :
- il évite
   - l'utilisation de colonnes de contact sous pression de grandes dimensions,
   - de porter le gaz à une température suffisamment basse avant d'opérer le procédé,
   - des opérations de distillation, et
- il permet :
   - de chauffer le solvant tout en réfrigérant le mélange de gaz et de solvant ce qui permet d'améliorer le pouvoir solvant et la sélectivité du solvant utilisé.

D'autres avantages et caractéristiques de l'invention apparaîtront mieux à la lecture de la description donnée ci-après d'exemples non limitatifs de réalisation, en se référant aux dessins annexés où :
- la figure 1 schématise un procédé de traitement selon l'art antérieur,
- la figure 2 illustre de manière schématique les étapes du procédé selon l'invention réalisées notamment dans une même zone d'échange de chaleur,
- la figure 3 montre une variante de mise en oeuvre du procédé où le gaz traité est utilisé pour aider à la réfrigération,
- la figure 4 montre une variante de réalisation de la figure 3,
- la figure 5 est donné pour illustrer un exemple numérique de mise en oeuvre du procédé,
- la figure 6 schématise une variante de réalisation où l'on divise le flux de gaz à traiter avant de mettre en oeuvre le procédé,
- la figure 7 montre une manière de procéder en deux étages et la figure 8 une variante de la figure 7,
- la figure 9 schématise un exemple de mise en oeuvre du procédé en plusieurs étages,
- la figure 10 est une variante de réalisation où l'on réalise simultanément la mise en contact du gaz traité et sa séparation de la phase solvant, et
- la figure 11 montre une variante de réalisation où la phase solvant enrichie en constituants est épurée de ces derniers dans la zone d'échange de chaleur.

La figure 1 montre schématiquement un mode de traitement habituellement utilisé selon l'art antérieur qui consiste à réaliser une étape d'absorption en mettant le gaz à traiter à contre-courant avec un solvant dans une colonne, le solvant ayant notamment pour fonction d'extraire sélectivement un ou plusieurs constituants contenus dans le gaz à traiter, puis à régénérer le solvant par distillation à pression réduite.

Le gaz à traiter est introduit dans la colonne C₁ par le conduit 1, un solvant est introduit en tête de la colonne C₁ par le conduit 3 et ressort de la colonne par le conduit 4 chargé en constituants à éliminer du gaz. En tête de la colonne C₁, le gaz traité, c'est-à-dire appauvri en constituants, est évacué par le conduit 2. Le solvant riche en constituants sortant de la colonne passe dans l'échangeur E₁ puis est détendu à travers la vanne de détente V₁. Il est alors distillé à pression réduite dans la colonne C₂. Le ou les constituants séparés du gaz traité sont évacués en tête de la colonne C₂ par le conduit 5. Le solvant appauvri est repris à la base de la colonne C₂ par la pompe de circulation P₁ et recyclé en tête de la colonne C₁.

Le solvant utilisé peut être un solvant chimique; par exemple une amine, ou un solvant physique tel qu'un alcool comme le méthanol, ou un éther comme le diméthyltétraéthylène glycol (DMETEG).

Si le solvant est un solvant physique, on sait par ailleurs qu'il est possible dans un certain nombre d'opérations d'améliorer le pouvoir solvant et la sélectivité de ce solvant physique en opérant, par exemple, à une température inférieure à la température ambiante.

Un tel procédé est particulièrement bien adapté à l'élimination d'impuretés ou tout au moins à la séparation d'un ou de plusieurs constituants présents en relativement faible teneur dans le gaz.

Lorsque les teneurs deviennent élevées, le procédé peut devenir coûteux du fait notamment de la nécessité de circuler et de distiller des quantités importantes de solvant fortement chargé en constituants à séparer du gaz.

De manière générale, la distillation du solvant, est une opération relativement coûteuse, qui nécessite de chauffer la colonne en fond et de la réfrigérer en tête.

Le principe du procédé selon l'invention, schématisé sur la figure 2, est explicité à titre illustratif et nullement limitatif pour le traitement d'un gaz naturel ou d'un gaz en raffinerie.

Le gaz à traiter, contenant par exemple au moins un constituant A à éliminer, tel que du CO₂, arrive par le conduit 10.

Il est par exemple mélangé avant d'être introduit dans l'échangeur E₂ à un solvant S liquide arrivant par le conduit 11 communiquant avec le conduit 10. Le mélange gaz-solvant passe dans l'échangeur E₂ où il est refroidi par une phase solvant S₁ introduite dans l'échangeur par le conduit 14 et circulant à contre-courant du mélange gaz-solvant.

A l'intérieur de l'échangeur E₂, le solvant S du mélange gaz-solvant circulant à co-courant avec le gaz à traiter, capte le ou les constituants à séparer présents dans le gaz à traiter en totalité ou au moins en partie. La composition du mélange à l'intérieur de l'échangeur évolue vers un mélange formé d'un solvant chargé en constituants A à séparer et d'un gaz appauvri de constituants.

Un échange de matière s'effectue entre la phase solvant S et le gaz à traiter, alors que l'échange de chaleur est réalisé entre le mélange gaz-solvant et la phase solvant S₁ circulant de préférence à contre-courant.

A la sortie de l'échangeur E₂, le mélange gaz-solvant est introduit dans le ballon séparateur B₁ et séparé en une phase gazeuse G₁ appauvrie en constituants A à séparer qui est évacuée par le conduit 13, et une phase solvant S₁ enrichie en constituants A à séparer évacuée par le conduit 14, muni d'une vanne V₂ de détente. La phase solvant S₁ détendue est envoyée par exemple vers l'échangeur E₂, dans lequel elle est chauffée par échange de chaleur avec le mélange gaz-solvant qui se refroidit. On génère ainsi une phase gazeuse G₂ qui est riche en constituants A. La phase solvant enrichie et chauffée est évacuée de l'échangeur E₂ par le conduit 15 vers un ballon de séparation B₂ en sortie duquel, on obtient une phase gazeuse G₂ enrichie en constituants et évacuée par le conduit 16, et une phase solvant S évacuée par le conduit 17 et éventuellement recyclée au moyen d'une pompe P₂ par le conduit 11, pour être mélangée avec le gaz à traiter introduit par le conduit 10.

Le procédé selon l'invention est par exemple mis en oeuvre en mettant en oeuvre au moins la succession d'étapes suivantes :
(a) on mélange le gaz à traiter G au moins en partie avec un solvant S choisi pour retenir sélectivement au moins un constituant A à séparer, le solvant S provenant au moins en partie de l'étape (d),
(b) on refroidit le mélange de gaz G et de solvant S en le faisant circuler à l'intérieur d'au moins une zone d'échange de chaleur de manière à obtenir en sortie de ladite zone d'échange de chaleur, au moins une phase gazeuse G₁ appauvrie en au moins un des constituants à séparer du gaz et une phase solvant S₁ enrichie en constituants à séparer,
(c) on sépare ladite phase solvant enrichie S₁ de la phase gazeuse G₁, et on recycle la phase solvant enrichie S₁ vers la zone d'échange de chaleur pour refroidir le mélange gaz-solvant au cours de l'étape (b), la phase solvant S₁ enrichie et chauffée étant, par exemple, en sortie de la zone d'échange de chaleur formée d'au moins une phase gazeuse G₂ enrichie en constituants à séparer et d'une phase solvant liquide S, et
(d) on sépare la phase gazeuse G₂ et la phase solvant liquide S issues de l'étape (c) et on recycle la phase solvant au moins épurée du ou des constituants à séparer vers l'étape (a).

Avantageusement, le procédé selon l'invention permet de réaliser à l'intérieur d'une même zone d'échange de chaleur l'absorption des constituants à éliminer du gaz à traiter en utilisant le solvant mélangé avec le gaz, ce mélange étant refroidi à l'intérieur de la zone d'échange, et simultanément, on régénère la phase solvant enrichie en constituants à séparer utilisée comme agent de refroidissement.

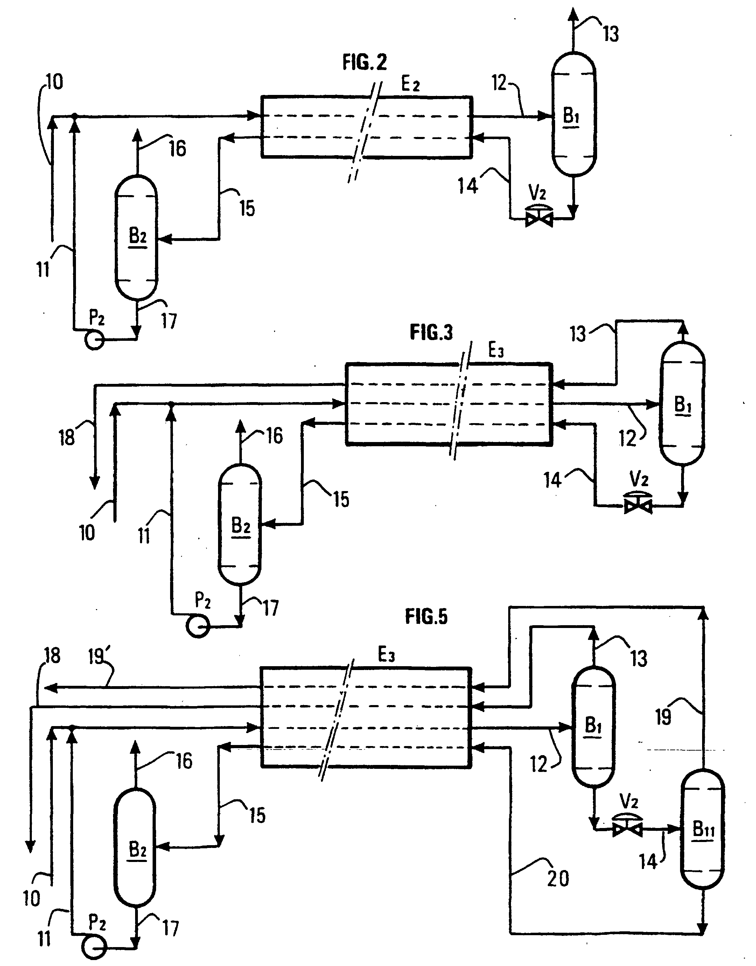

Le gaz traité G₁ sortant froid du ballon séparateur B₁ par le conduit 13, il peut être avantageux de réaliser un échange thermique entre ce gaz froid et le mélange gaz-solvant à refroidir, opéré par exemple selon le schéma de la figure 3.

Dans cet exemple de réalisation, le mélange gaz-solvant circulant à l'intérieur de l'échangeur E₃ est refroidi par échange de chaleur simultanément avec au moins une partie de la phase solvant S₁ issue du ballon séparateur B₁ et recyclée dans l'échangeur E₃ par le conduit 14 et au moins une partie G₁ du gaz traité issue du ballon séparateur B₁ et recyclée par le conduit 13 dans l'échangeur E₃. Il est aussi possible de séparer le gaz traité issu du ballon B₁ et d'évacuer au moins une fraction de ce gaz directement sans le faire passer à travers l'échangeur, alors qu'une partie est recyclée vers l'échangeur E₃ par le conduit 13. La phase gazeuse est ensuite évacuée par le conduit 18 après avoir été réchauffée.

Pour assurer une régénération au moins partielle de la phase solvant et pouvoir réfrigérer le mélange de gaz et de solvant, la phase solvant S₁ enrichie et issue du ballon B₁, est par exemple détendue par passage à travers une vanne de détente V₂, ou encore par passage dans une turbine. Dans ce dernier cas, l'énergie mécanique de détente est par exemple avantageusement récupérée et utilisée par exemple pour entraîner la pompe P₂ permettant le recyclage de la phase solvant épurée au moins en partie des constituants à séparer pour être mélangée au gaz à traiter.

Les échanges de chaleur qui sont opérés au cours de l'étape (b) sont effectués de préférence en faisant circuler le mélange gaz-solvant et les autres fluides à contre-courant, de façon à améliorer l'efficacité des opérations de réfrigération et de chauffage qui sont par exemple menées simultanément au cours de cette étape (b).

La réfrigération nécessaire pour réaliser l'étape (b) peut être assurée par tout moyen connu de l'homme du métier.

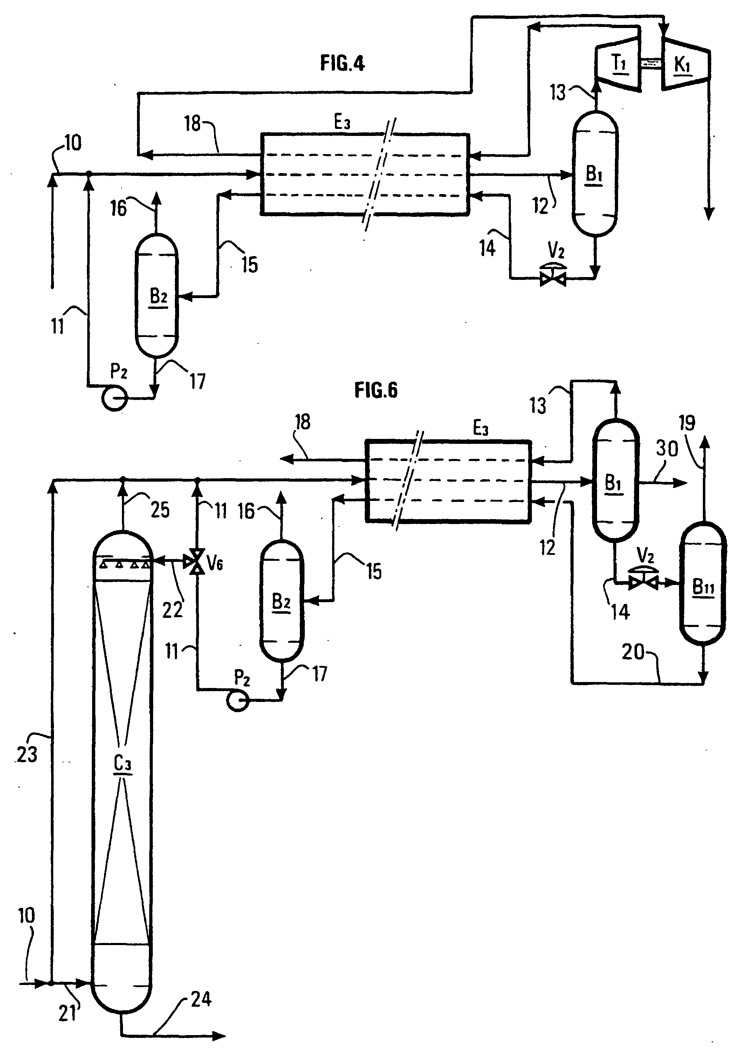

La figure 4 montre une variante de réalisation de la figure 3 où la phase gazeuse G₁ issue du ballon-séparateur B₁ est refroidie avant d'être utilisée pour refroidir au moins en partie le mélange gaz-solvant dans l'échangeur E₃.

Pour cela, la phase gazeuse issue du ballon séparateur B₁ est envoyée à travers une turbine T₁ où elle est détendue pour abaisser sa température avant d'être envoyé vers l'échangeur E₃. L'énergie de détente est par exemple récupérée pour recomprimer le gaz G₁ sortant de l'échangeur E₃ par le conduit 18 dans le compresseur K₁ qui est entraîné par exemple par la turbine T₁.

Il est également possible d'utiliser cette énergie de détente par exemple pour recomprimer la fraction gazeuse G₂ issue par le conduit 16 qui est enrichie en constituants à séparer.

Selon un autre mode de mise en oeuvre, on utilise, par exemple un fluide réfrigérant provenant par exemple d'un cycle de réfrigération externe.

Les échanges de chaleur qui sont opérés au cours de l'étape (b), peuvent être effectués dans une ou plusieurs zones d'échange de chaleur opérant en parallèle et/ou en série.

La ou les zones d'échange comportent par exemple un ou plusieurs échangeurs de chaleur à tubes et calandres et/ou des échangeurs à plaques.

Les échangeurs à plaques présentent notamment comme avantage de permettre des échanges de chaleur entre plusieurs fluides ainsi que des échanges à contre-courant.

Ces échangeurs de chaleur peuvent être par exemple des échangeurs à plaques en aluminium brasé ou des échangeurs à plaques en acier inoxydable par exemple.

L'intérêt du procédé selon l'invention sera mieux compris à la lecture d'un exemple numérique décrit en relation avec la figure 5, différent du dispositif de la figure 3 par l'ajout d'un ballon de séparation après le ballon B₁.

### Exemple 1

Un gaz à traiter ayant une composition molaire exprimée en fractions molaires d'environ 50% de CH₄ et de 50% de CO₂, arrive sous une pression de l'ordre de 6 MPa par le conduit 10. Il est mélangé avant d'être introduit dans la zone d'échange E₃ avec un solvant arrivant par le conduit 11.

Le solvant est par exemple formé de méthanol contenant une teneur de 10 % d'eau exprimée en fraction molaire.

Selon un principe sensiblement identique à celui qui est décrit à la figure 3, le mélange de gaz et de solvant est refroidi à l'intérieur de l'échangeur E₃ jusqu'à une température de -20°C dans cet exemple. Dans le ballon séparateur B₁, on sépare une phase gazeuse G₁ qui est évacuée par le conduit 13, et une phase solvant S₁ évacuée par le conduit 14 équipé de la vanne de détente V₂.

La fraction molaire de CO₂ dans la fraction gazeuse G₁ traitée et évacuée par le conduit 13 ne représente plus que 25 % du mélange CH₄/CO₂. Cette fraction gazeuse est par exemple envoyée dans l'échangeur E₃ d'où elle ressort réchauffée par le conduit 18.

La phase solvant S₁ évacuée du ballon B₁ est détendue à travers la vanne V₂. On obtient ainsi une phase solvant liquide et une phase gazeuse qui sont séparées dans le ballon séparateur B₁₁, la pression régnant dans le ballon séparateur étant de 3 MPa, dans cet exemple.

La phase gazeuse séparée dans le ballon B₁₁ est évacuée par le conduit 19, pour être envoyée dans l'échangeur E₃ où elle utilisée pour refroidir le mélange gaz-solvant. Elle ressort de cet échangeur par le conduit 19' avant d'être éventuellement mélangée avec le gaz ressortant de l'échangeur E₃ par le conduit 18. Elle peut aussi être utilisée comme fuel-gas.

La phase solvant évacuée par le conduit 20 est envoyée vers l'échangeur de chaleur E₃ pour régénérer au moins partiellement le solvant et assurer au moins en partie le refroidissement du mélange gaz-solvant. A l'intérieur de cet échangeur E₃ elle est régénérée par échange de chaleur en se réchauffant et en refroidissant le mélange de gaz et de solvant qui circule, par exemple à contre-courant. On obtient ainsi après passage dans l'échangeur E₃, une phase gazeuse et une phase liquide qui sont envoyées par le conduit 15 dans le ballon séparateur B₂ pour être séparées, la phase solvant épurée d'une partie au moins des constituants absorbés qui sont entraînés dans la phase gazeuse est par exemple recyclée au moyen de la pompe P₂, par exemple, vers le conduit 11 pour être mélangée avec le gaz à traiter arrivant par le conduit 10. La phase gazeuse riche en CO₂ est évacuée par le conduit 16.

Cet exemple illustre une disposition consistant à l'issue de l'étape (c) à séparer de la phase solvant une première fraction gazeuse par chauffage et/ou détente pour enrichir par exemple la phase solvant en constituant(s) à séparer.

Selon un autre mode de mise en oeuvre du procédé, il est également possible de traiter un gaz contenant de l'eau et des hydrocarbures plus lourds que le méthane ainsi que des gaz acides à séparer. On utilise par exemple une disposition telle que celle illustrée sur le schéma de la figure 6, qui ajoute par rapport aux procédés décrits aux figures 2 à 5, une étape de séparation préalable du gaz à traiter.

Le gaz à traiter est, par exemple séparé en deux fractions ou parties avant d'être introduit dans l'échangeur E₃.

Pour cela, on opère selon le procédé suivant :
le gaz à traiter arrive par le conduit 10 à partir duquel il est séparé en
   * une première fraction F₁, représentant, par exemple la moitié du débit total de gaz à traiter qui est envoyé par le conduit 21 dans la colonne de contact C₃, dans laquelle cette première fraction est mise en contact à contre-courant par exemple avec une phase solvant arrivant par le conduit 22, la phase solvant comportant par exemple un mélange de méthanol et d'eau,
   * une seconde fraction F₂ qui est envoyée directement vers l'échangeur E₃ par le conduit 23, les deux fractions étant réunies avant d'être introduites dans l'échangeur E₃.

Dans la colonne C₃, la première fraction F₁ de gaz à traiter se charge en solvant et on évacue par exemple en fond de colonne, par le conduit 24 une phase aqueuse substantiellement débarrassée de solvant et en tête de la colonne, par le conduit 25 une phase gazeuse chargée en solvant qui est mélangée par exemple avec la deuxième fraction gazeuse qui passe par le conduit 23 sans traverser la colonne C₃. Le mélange gazeux ainsi obtenu est mélangé par exemple avec une phase solvant arrivant par le conduit 11. Le mélange de gaz et de solvant est ensuite refroidi dans l'échangeur E₃ et traité selon le principe du procédé décrit en relation avec la figure 3.

A la sortie de l'échangeur E₃, on obtient ainsi trois phases qui sont séparées dans le ballon-séparateur B₁, une phase gazeuse qui forme le gaz traité qui est évacuée par le conduit 13, une phase hydrocarbure liquide qui est évacuée par le conduit 30 et une phase solvant enrichie en gaz acide, par exemple évacuée par le conduit 14. La phase solvant S₁ enrichie en gaz acides est par exemple détendue au moyen de la vanne V₂ avant d'être envoyée dans le ballon séparateur B₁₁ en sortie duquel on obtient une phase gazeuse qui est évacuée par le conduit 19 alors que la phase solvant enrichie en gaz acides est évacuée et envoyée par le conduit 20 vers l'échangeur E₃ à l'intérieur duquel elle est régénérée, selon par exemple l'agencement représenté sur à la figure 2. A la sortie du ballon séparateur B₂, la phase solvant régénérée issue par le conduit 17 et reprise par la pompe P₂ est partagée en au moins deux fractions au moyen par exemple de la vanne de répartition V₆. Une première fraction est alors envoyée par le conduit 11 pour être mélangée avec le gaz à traiter circulant dans le conduit 23, alors qu'une deuxième fraction est envoyée par le conduit 22 vers la partie supérieure de la colonne C₃.

Dans cet exemple de mise en oeuvre du procédé, le mélange initial de gaz et de solvant comporte à la sortie de la zone d'échangeur de chaleur, trois phases comportant outre la phase gazeuse G₁ et la phase solvant S₁, une deuxième phase liquide qui est soutirée par le conduit 30 à la sortie de l'échangeur E₃, par séparation dans le ballon B₁.

De manière plus générale, la disposition schématisée sur la figure 6 permet notamment de traiter un gaz contenant de l'eau, le solvant S utilisé présentant notamment comme particularité d'être miscible avec l'eau. On utilise par exemple du méthanol en mettant en contact dans une zone de contact C₃ à contre-courant, de préférence, une fraction de la phase solvant issue de l'étape (b) avec au moins une fraction de gaz à traiter, en soutirant par exemple en tête de la zone de contact C₃ un gaz chargé en solvant qui est envoyé à l'étape (a) et en soutirant en fond de cette zone de contact par le conduit 24 une phase aqueuse substantiellement débarrassée de solvant.

Le procédé selon l'invention peut aussi être avantageusement utilisé pour séparer d'une phase gazeuse comportant au moins un gaz léger tel que l'hydrogène ou l'azote une fraction enrichie en au moins un constituant tel que le méthane, l'éthane, le propane, le butane et/ou le pentane, le solvant utilisé pouvant être par exemple formé par une phase hydrocarbure liquide ou par un solvant tel que le méthanol.

En opérant par exemple selon le schéma de la figure 6, il est possible de traiter un gaz naturel comportant de l'azote, de l'eau et des hydrocarbures plus lourds que le méthane.

En sortie du ballon séparateur B₂, on évacue un gaz enrichi en méthane par le conduit 16, alors qu'à la sortie de l'échangeur E₃ on évacue un gaz enrichi en azote.

Le solvant utilisé dans cette mise en oeuvre est par exemple du méthanol, ou encore un hydrocarbure ou un mélange d'hydrocarbures.

Les conditions utilisées pour réaliser une telle séparation sont par exemple illustrées par l'exemple numérique suivant, décrit en relation avec la figure 5.

### Exemple 2

La composition du mélange gazeux à traiter arrivant par le conduit 10 exprimée en fractions molaires est la suivante :
75 % CH₄.
25 % N₂

La pression d'entrée de ce mélange gazeux est de l'ordre de 5 MPa. Ce mélange gazeux est mélangé avec le solvant introduit par le conduit 11, constitué dans cet exemple par de l'isopentane.

Le mélange de gaz et de solvant ainsi obtenu est refroidi jusqu'à une température de -110°C à l'intérieur de l'échangeur E₃.

A la sortie du ballon séparateur B₁, on obtient :
* une phase gazeuse qui comporte une fraction d'azote qui représente environ 60 % en fraction molaire du mélange de méthane et d'azote, cette fraction gazeuse étant envoyée dans l'échangeur E₃ puis évacuée par le conduit 18,
* une phase solvant qui est détendue au moyen de la vanne V₂, la phase vapeur et la phase liquide issues de cette détente étant séparées dans le ballon séparateur B₁₁, la pression régnant à l'intérieur de ce ballon étant, par exemple de 3 MPa.

La phase solvant issue du ballon séparateur B₁₁ est envoyée par le conduit 20 vers l'échangeur E₃, où elle est régénérée en se réchauffant et en refroidissant le mélange de gaz et de solvant qui circule par exemple à contre-courant. On obtient ainsi une phase gazeuse et une phase liquide qui sont séparées dans le ballon séparateur B₂. La phase liquide solvant est recyclée au moyen de la pompe P₂ et la phase gazeuse contenant environ 80 % de méthane est évacuée par le conduit 16.

Il est aussi possible d'utiliser une disposition similaire pour séparer le méthane d'un autre gaz léger tel que l'hydrogène.

Elle trouve aussi son application pour séparer d'autres hydrocarbures que le méthane, par exemple l'éthane, le propane, le butane et/ou le pentane d'un gaz léger comportant par exemple de l'hydrogène ou de l'azote.

Le traitement du gaz et notamment la séparation d'au moins un de ses constituants, A peut être amélioré en utilisant un ou plusieurs étages semblables aux étages décrits aux figures 3 et 4, disposés par exemple en série.

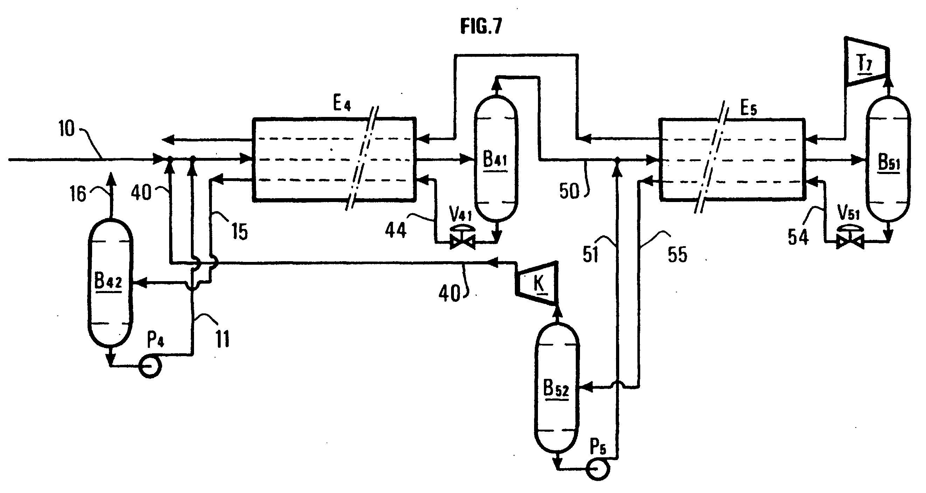

La figure 7 illustre de manière schématique un exemple de variante de dispositif permettant d'opérer en deux étages disposés l'un à la suite de l'autre et fonctionnant selon un principe sensiblement identique à celui qui a été décrit sur les figures 3 ou 4 par exemple.

Le premier étage comporte un échangeur E₄, un ballon-séparateur B₄₁ situé après l'échangeur, une vanne de détente V₄₁ disposée sur le conduit 44 de retour de la phase solvant vers l'échangeur E₄, un ballon-séparateur B₄₂ et une pompe de recyclage P₄, ainsi que des conduits d'arrivée et d'évacuation des différents fluides, ces différents éléments étant disposés selon un agencement similaire à celui qui est représenté sur la figure 2.

Le second étage comporte de façon similaire un échangeur E₅, un ballon-séparateur B₅₁ situé après l'échangeur, une vanne de détente V₅₁ disposée sur le conduit 54 de retour vers l'échangeur E₅, un ballon-séparateur B₅₂, un compresseur K et une pompe de recyclage P₅, ainsi que des conduits d'arrivée et d'évacuation des différents fluides, une turbine T₇ ou tout moyen permettant de refroidir une phase gazeuse issue du ballon séparateur B₅. On retrouve ainsi les éléments et leur configuration au moins en partie décrits en référence, par exemple aux figures 3 ou 4.

On fait circuler la phase de gaz traité issue de la turbine T₇ vers l'échangeur E₅ puis vers l'échangeur E₄. Le conduit de sortie du gaz traité issue du ballon B₄₁ est lui-même relié à l'entrée de l'échangeur E₅.

La mise en oeuvre du procédé selon le schéma de la figure 7 s'effectue par exemple de la manière suivante :

On envoie dans l'échangeur E₄ du premier étage, le gaz à traiter arrivant par le conduit 10 et une partie au moins du gaz traité dans le second étage et recyclé par le conduit 40 après passage dans le compresseur K.

On envoie par l'intermédiaire du conduit 11 une phase solvant qui va se mélanger aux deux fractions de gaz qui ont été réunies. Le mélange gaz-solvant est ensuite introduit dans l'échangeur E₄.

Le mélange ainsi obtenu est traité au niveau du premier étage E₄ selon un mode identique à celui décrit en référence à la figure 2, par exemple. Il est refroidi à l'intérieur de l'échangeur E₄, en échangeant de la chaleur avec une phase solvant S₁ qui provient du ballon séparateur B₄₁ et qui a été détendue au moyen de la vanne de détente V₄₁ avant sa réinjection dans l'échangeur E₄. A la sortie de l'échangeur E₄, le mélange gaz traité et phase solvant sont séparés à l'intérieur d'un ballon de séparation B₄₂ selon un schéma identique à celui décrit à la figure 2.

Lors de l'échange de chaleur dans l'échangeur E₄, la phase solvant S₁ est chauffée et se présente à la sortie de l'échangeur E₄ sous une forme liquide-vapeur envoyée vers le ballon séparateur B₄₂ où elle est séparée en au moins une fraction gazeuse enrichie en constituants A à séparer qui est évacuée par le conduit 16 et une phase solvant S épurée au moins en partie du ou des constituants A entraînés dans la phase gazeuse. Cette phase solvant épurée est ensuite recyclée au moyen de la pompe P₄ vers le conduit 11 pour être mélangée avec le mélange gazeux à traiter.

La fraction gazeuse issue de l'opération de séparation dans le ballon-séparateur B₄₁ est envoyée en partie ou en totalité par le conduit 50 vers le second étage pour être introduite dans le second échangeur E₅. Au préalable elle est mélangée avec un solvant introduit par le conduit 51.

A l'intérieur de l'échangeur E₅, le mélange, gaz à traiter-solvant, est refroidi en échangeant de la chaleur avec, d'une part la phase solvant introduite par le conduit 54, et d'autre part une partie au moins de la phase gazeuse issue du ballon-séparateur B₅₁ et refroidi par une turbine T₇.

En sortie d'échangeur E₅, on obtient un mélange qui est séparé dans le ballon de séparation B₅₁ à la sortie duquel on obtient une phase gazeuse et une phase solvant envoyées respectivement vers la turbine T₇ et la vanne V₅₁.

La phase gazeuse est par exemple détendue à travers la turbine T₇ avant d'être envoyée vers l'échangeur E₅ pour être utilisée comme agent de réfrigération, d'où elle ressort refroidie pour être envoyée vers l'échangeur de chaleur E₄ du premier étage.

La fraction solvant issue du ballon-séparateur B₅₁ et envoyée après détente à travers la vanne V₅₁ par le conduit 54 vers l'échangeur E₅ dans lequel elle est régénérée en se réchauffant par échange de chaleur avec le mélange gaz-solvant. Le mélange liquide-vapeur ainsi obtenu est ensuite évacué par le conduit 55 vers le ballon-séparateur B₅₂. On obtient après séparation une phase gazeuse qui est envoyée vers le compresseur K, de façon à être recomprimée avant d'être envoyée pour être mélangée avec le gaz à traiter, et une fraction de phase solvant qui est par exemple reprise et recyclée au moyen d'une pompe P₃ et du conduit 51 à l'entrée de l'échangeur E₅ vers le conduit 50 d'arrivée du gaz avec lequel elle est mélangée.

Sur le schéma de la figure 7, chacun des étages (E₄, E₅) comporte une boucle indépendante de circulation du solvant permettant par exemple d'injecter un solvant au niveau de chaque étage. Il est également possible d'opérer avec une boucle unique en envoyant le solvant uniquement au niveau du premier étage du procédé et en le récupérant par exemple au niveau du dernier étage.

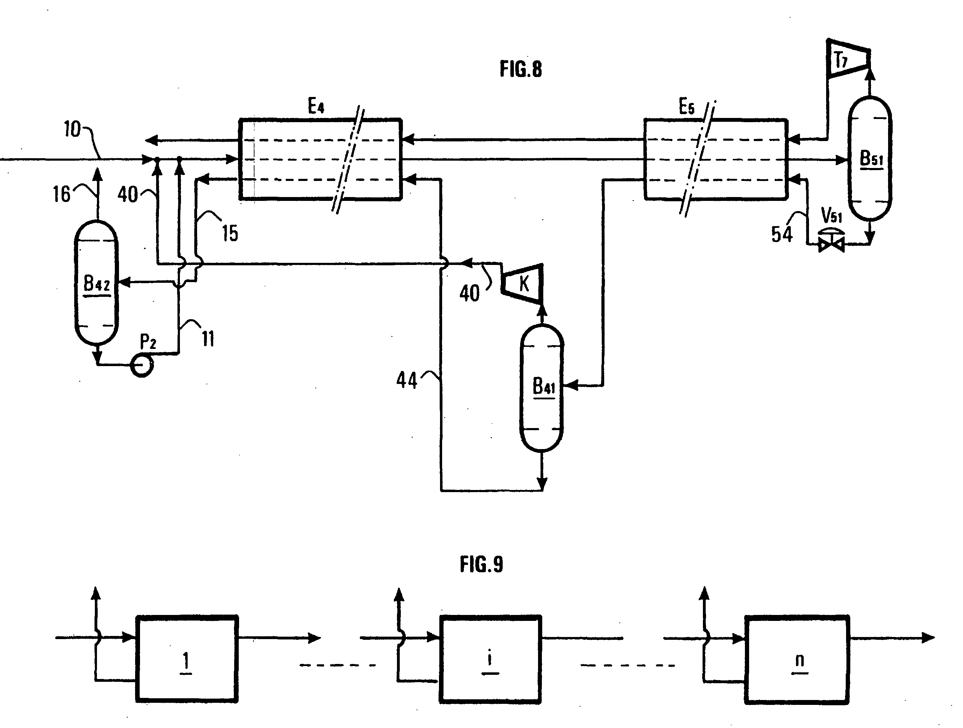

La figure 8 montre un autre exemple de réalisation où la phase solvant est séparée, en sortie de l'échangeur E₅ du deuxième étage, dans le ballon-séparateur B₅₁. Elle est détendue et envoyée dans l'échangeur E₅ en refroidissement le mélange gaz à traiter-solvant. A la sortie de l'échangeur E₅ la phase solvant se présentant sous forme liquide-vapeur est envoyée dans le ballon de séparation B₄₁ à la sortie duquel on obtient une fraction solvant qui est recyclée par le conduit 44 vers l'échangeur E₄ du premier étage.

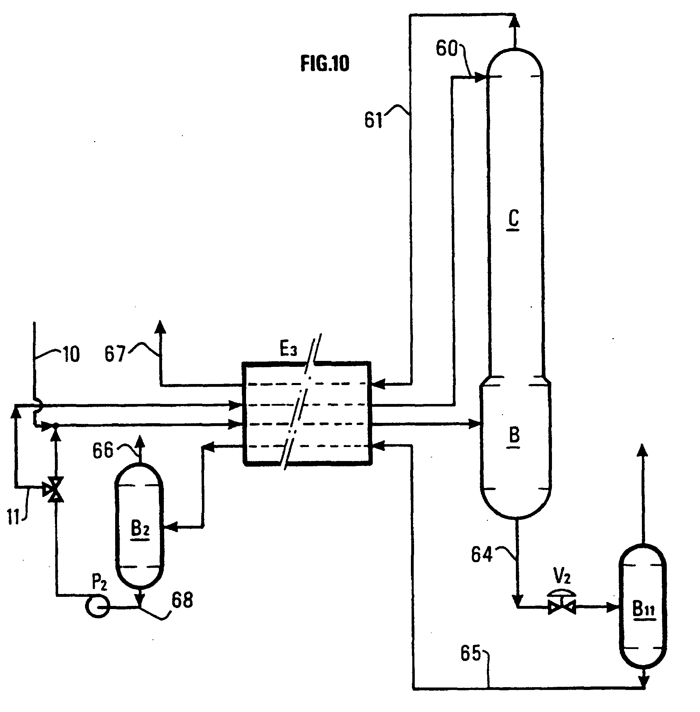

La figure 9 schématise la possibilité d'opérer avec un nombre n quelconques d'étages.

Le gaz appauvri en au moins un constituant par exemple le constituant A à séparer sortant d'un étage i est envoyé à l'étage suivant i+1, tandis que le gaz enrichi en constituant A à séparer sortant d'un étage i est envoyé vers l'étage précédent i-1.

La figure 10 schématise un mode particulier de mise en oeuvre du procédé adapté à réduire la teneur en au moins un constituant A à séparer du gaz à traiter, comportant une étape de mise en contact à contre-courant entre la phase gazeuse G₁ et une fraction au moins de la phase solvant S₁.

On opère par exemple de la manière suivante :

Le gaz à traiter arrivant par le conduit 10 est mélangé avec un solvant introduit par le conduit 11 avant d'être introduit dans l'échangeur E₃. Le mélange gaz-solvant ainsi obtenu est refroidi à l'intérieur de cet échangeur et envoyé ensuite dans un ballon-séparateur B comportant une zone de contact C, par exemple au niveau de sa partie supérieure.

La fraction gazeuse issue de la séparation du mélange à l'intérieur du ballon est mise en contact dans la zone de contact C, par exemple à contre-courant avec une phase solvant qui est introduite dans la partie supérieure du ballon par le conduit 60. En tête de cette zone de contact, le gaz traité est évacué du ballon par le conduit 61 vers l'échangeur E₃ où il sert notamment d'agent de réfrigération et d'où il ressort par le conduit 67.

La phase solvant séparée et évacuée par le conduit 64 est détendue au moyen par exemple d'une vanne de détente V₂ équipant le conduit, le mélange liquide-vapeur obtenu par détente étant ensuite envoyé dans le ballon séparateur B₁₁. A la sortie de ce ballon-séparateur on obtient une phase solvant évacuée par le conduit 65 et envoyée vers l'échangeur E3 dans lequel elle est régénérée par échange de chaleur avec le mélange gaz à traiter-solvant. Le mélange liquide-gaz ainsi obtenu est ensuite séparé dans le ballon séparateur B₂, à la sortie duquel une phase gazeuse riche en constituant A est évacuée par le conduit 66 et une phase solvant épurée au moins en partie du constituant A est reprise par la pompe P₂ pour être ensuite partagée en plusieurs fractions au moyen par exemple d'une vanne de répartition V. Une fraction solvant épurée au moins en partie de constituant est ensuite envoyée vers le conduit 11 pour être mélangée avec le gaz à traiter alors qu'une partie est envoyée vers l'échangeur E₃, refroidie à l'intérieur de cet échangeur pour être introduite par exemple en tête de la zone de contact C du ballon séparateur B.

La zone de contact C est par exemple formée d'un élément de colonne à garnissage ou un élément de colonne à plateaux.

Elle peut aussi être constituée, par exemple d'un échangeur disposé verticalement opérant par exemple en échangeur-colonne. Les canaux de cet échangeur, qui est par exemple un échangeur à plaques servant alternativement à faire passer le gaz froid, par exemple sortant en tête de la zone de contact qui peut avoir subi une étape de réfrigération complémentaire, par exemple par détente, et à réaliser un contact à contre-courant entre le gaz et le solvant.

La phase solvant S₁ peut subir par exemple une étape de régénération supplémentaire par détente et/ou chauffage par exemple dans un échangeur chauffé à l'aide d'un fluide extérieur ou dans une colonne de distillation.

De même les phases gazeuses G₁ et G₂ peuvent passer par une étape de rectification complémentaire par exemple pour récupérer au moins en partie le solvant entraîné.

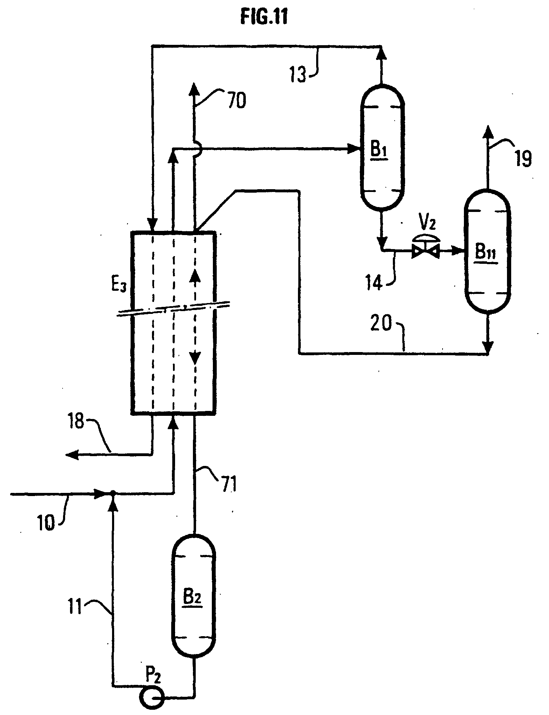

La figure 11 schématise une variante de réalisation présentant notamment comme avantage de réaliser simultanément la séparation de la phase gazeuse G₂ générée par chauffage lors de son passage dans une zone d'échange de chaleur de la phase solvant liquide, en faisant circuler la phase gazeuse G₂ à contre-courant de la phase solvant liquide S.

Pour cela, on dispose par exemple la zone d'échange de chaleur dans une position permettant d'obtenir cette circulation à contre-courant, par exemple en disposant l'échangeur dans une position sensiblement verticale ou encore inclinée.

La phase solvant liquide va descendre alors que la phase gazeuse G₂ circule à contre-courant d'une manière ascendante. Ceci permet notamment d'évacuer la phase vapeur générée du côté le plus froid de l'échangeur ou de la zone d'échange et notamment de limiter la teneur en solvant de la phase vapeur évacuée.

L'échangeur E₃ est par exemple disposé verticalement.

Selon un mode de mise en oeuvre du procédé sensiblement identique à celui décrit aux figure 3 ou 4, le gaz à traiter arrivant par le conduit 10 est mélangé avec un solvant introduit par le conduit 11 avant d'être introduit dans l'échangeur E₃.

Conformément au procédé décrit précédemment la phase solvant issue du ballon séparateur B₁₁ est introduite par exemple en tête de l'échangeur E₃ et circule de manière descendante à l'intérieur de E₃. La phase vapeur générée par chauffage circule à contre-courant.

L'échangeur E₃ est par exemple un échangeur à plaques, l'espace entre les plaques étant suffisant pour obtenir une vitesse de passage de la phase vapeur évitant l'entraînement de la phase liquide.

En tête de l'échangeur E₃, on récupère par exemple par le conduit 70, la phase gazeuse ou vapeur et en fond de l'échangeur par le conduit 71 la phase solvant régénérée qui est recyclée par la pompe P₂.

Les différents modes de réalisation peuvent être avantageusement utilisés pour le traitement de différents types de gaz, par exemple un gaz naturel sous pression riche en méthane, un gaz de raffinerie ou un gaz de synthèse contenant de l'hydrogène.

Le ou les constituants à séparer du gaz à traiter sont par exemple des gaz acides tels que le CO₂ et/ H₂S.

Dans ce cas, le solvant utilisé est un solvant chimique ou physique.

De préférence, on utilise un solvant physique par exemple un alcool comme le méthanol ou l'éthanol, un éther tel que par exemple le méthylpropyléther, l'éthylpropyléther, le méthyltertiobutyléther, le carbonate de propylène, le méthoxyéthanol.

Le ou les constituants à séparer du gaz à traiter peuvent aussi être des hydrocarbures tels que l'éthane, le propane, le butane qui sont par exemple séparés du méthane. L'un des constituants à séparer, peut aussi être le méthane qui peut être séparé par exemple d'un gaz contenant de l'hydrogène ou de l'azote.

Dans ce cas, le solvant est par exemple un essence légère formée par exemple par une coupe d'hydrocarbures à cinq et six atomes de carbone par molécule ou encore un autre solvant physique comme par exemple le méthanol.

La pression à laquelle s'effectue la séparation (pression du gaz à traiter) est par exemple comprise entre 2 et 10 MPa. Le mélange de gaz et de solvant est réfrigéré jusqu'à une température par exemple comprise entre -20 et -100 °C.

Le procédé selon l'invention trouve aussi avantageusement son application pour traiter un gaz comportant plusieurs constituants et notamment pour séparer de ce gaz, une fraction comprenant par exemple du dioxyde de carbone CO₂ et de l'hydrogène sulfuré H₂S ou du dioxyde de soufre SO₂ ou encore une fraction formée par un mélange d'hydrocarbures, d'un gaz qui comporte, par exemple différents constituants en mélange comme par exemple du méthane et de l'hydrogène ou du méthane et de l'azote.

En opérant en plusieurs étapes, il est également possible de séparer des fractions gazeuses de composition différentes par exemple une première fraction gazeuse enrichie en CO₂ puis une deuxième fraction gazeuse enrichie en H₂S.

## Revendications

1. Procédé de traitement d'un gaz G comportant un ou plusieurs constituants A à séparer, dans lequel on effectue les étapes suivantes :
(a) on mélange le gaz à traiter G au moins en partie avec un solvant S choisi pour retenir sélectivement au moins un des constituants à séparer, ledit solvant S provenant au moins en partie de l'étape (f),
(b) on refroidit le mélange de gaz G et de solvant S en le faisant circuler à l'intérieur d'au moins une zone d'échange de chaleur de manière à obtenir en sortie de ladite zone d'échange de chaleur, au moins une phase gazeuse G₁ appauvrie en au moins un des constituants A à séparer et une phase solvant S₁ enrichie en constituants à séparer,
(c) on sépare ladite phase solvant enrichie S₁ de ladite phase gazeuse G₁,
(d) on détend ladite phase solvant enrichie S₁ issue de l'étape (c) pour obtenir une phase solvant détendue,
**caractérisé en ce qu'**on effectue en outre les étapes:
(e) on recycle ladite phase solvant détendue dans la zone d'échange de chaleur pour refroidir ledit mélange de gaz et de solvant (étape b), ladite phase solvant S₁ étant en sortie de la zone d'échange de chaleur formée d'au moins une phase gazeuse G₂ enrichie en constituants A à séparer et d'une phase solvant liquide S, et
(f) on sépare la phase gazeuse G₂ et la phase solvant liquide S issues de l'étape (e) et on recycle la phase solvant au moins partiellement épurée du ou des constituants A à séparer vers l'étape (a).

2. Procédé selon la revendication 1, **caractérisé en ce qu'**au cours de l'étape (b) on fait circuler à contre-courant le mélange de gaz et de solvant et la phase solvant détendue utilisée comme agent de réfrigération.

3. Procédé selon l'une des revendications 1 à 2, **caractérisé en ce que** l'on refroidit au moins une partie de la phase gazeuse G₁ issue de l'étape (c), de préférence par détente à travers une turbine (T₁), et on l'envoie dans la zone d'échange de chaleur pour refroidir le mélange de gaz et de solvant.

4. Procédé selon l'une des revendications de 1 à 3, **caractérisé en ce qu'**à l'issue de l'étape (e), on sépare une première fraction gazeuse de la phase solvant liquide S par détente et/ou chauffage pour enrichir la phase solvant en constituants A.

5. Procédé selon l'une des revendications 1 à 4, **caractérisé en ce que** l'on opère à une température en sortie de l'étape (b) comprise entre -20°C et -100°C.

6. Procédé selon l'une des revendications 1 à 4, **caractérisé en ce que** l'on réitère au moins les étapes (b), (c), (d) et (e) lors de plusieurs opérations réalisées dans des zones de contact i, la phase gazeuse G₁ obtenue à là sortie de la zone de contact i étant envoyée à la zone de contact suivante i+1 et la phase gazeuse G₂ enrichie en constituants étant envoyée à la zone de contact précédente i-1.

7. Procédé selon l'une des revendications 1 à 6, pour traiter un gaz comportant au moins un gaz acide, **caractérisé en ce que** la phase gazeuse G₁ est appauvrie en constituants comportant au moins un des gaz acides tel que le dioxyde de carbone CO₂ ou l'hydrogène sulfuré H₂S, et **en ce que** l'on utilise comme solvant S mélangé avec le gaz à traiter, un solvant physique tel qu'un alcool, tel que le méthanol ou l'éthanol, un éther tel que le méthylpropyléther, l'éthylpropyléther, le méthyltertiobutyléther ou encore le carbonate de propylène ou le méthoxyéthanol.

8. Procédé selon l'une des revendications 1 à 6 pour traiter un gaz, comportant au moins de l'hydrogène et de l'azote et où ladite fraction séparée du gaz traité comporte au moins un hydrocarbure tel que le méthane, l'éthane, le propane, le butane et/ou le pentane, le gaz à traiter comportant au moins de l'hydrogène et de l'azote.

9. Procédé selon l'une des revendications 1 à 8, pour traiter un gaz comportant au moins de l'eau, **caractérisé en ce que**
- on utilise un solvant miscible à l'eau tel que le méthanol et avant d'effectuer l'étape (a) ou l'étape (b),
- on sépare ledit gaz à traiter en une première fraction F₁ et une seconde fraction F₂,
- on met en contact dans une zone de contact C₃ et à contre-courant une fraction de la phase solvant liquide S₁ issue de l'étape (b) avec au moins la première fraction F₁ du gaz à traiter, en soutirant de ladite zone de contact C₃ un gaz chargé en solvant, ledit gaz chargé en solvant étant ensuite mélangé avec la seconde fraction F₂ et envoyé à l'étape (a) et
- on extrait de ladite zone de contact C₃ une phase aqueuse substantiellement débarrassée de solvant.

## Patentansprüche

1. Verfahren zur Behandlung eines einen oder mehrere zu trennende Bestandteile A umfassenden Gases, bei dem man die folgenden Stufen ausführt :
(a) man mischt das zu behandelnde Gas G wenigstens zum Teil mit einem Lösungsmittel S, das so gewählt ist, dass es selektiv wenigstens einen der zu trennenden Bestandteile zurückhält, wobei das Lösungsmittel S wenigstens zum Teil aus der Stufe (f) stammt,
(b) man kühlt das Gemisch aus Gas G und Lösungsmittel S, indem man es im Inneren wenigstens einer Wärmeaustauscherzone derart strömen lässt, dass man am Austritt aus dieser Wärmeaustauscherzone wenigstens eine gasförmige Phase G₁, die wenigstens zum Teil an einem der zu trennenden Bestandteile A verarmt ist und eine Lösungsmittelphase S₁ erhält, die an den zu trennenden Bestandteilen angereichert ist,
(c) man trennt diese an dieser gasförmigen Phase G₁ angereicherte Lösungsmittelphase S₁ ab,
(d) man entspannt diese aus der Stufe (c) stammende angereicherte Lösungsmittelphase S₁, um eine entspannte Lösungsmittelphase zu erhalten,
**dadurch gekennzeichnet, dass** man außerdem die folgenden Stufen durchführt:
(e) man rezykliert diese entspannte Lösungsmittelphase in die Wärmeaustauscherzone, um dieses Gemisch aus Gas und Lösungsmittel (Stufe b) zu kühlen, wobei diese Lösungsmittelphase S₁ am Austritt aus der Wärmeaustauscherzone aus wenigstens einer Gasphase G₂ gebildet ist, die an den zu trennenden Bestandteilen A und einer flüssigen Lösungsmittelphase S angereichert ist, und
(f) man trennt die gasförmige Phase G₂ und die flüssige Lösungsmittelphase S, die aus der Stufe (e) stammen und rezykliert die wenigstens teilweise von dem oder den abzutrennenden Bestandteil(en) A gereinigte Lösungsmittelphase gegen die Stufe (a).

2. Verfahren nach Anspruch 1, **dadurch gekennzeichnet, dass** man während der Stufe (b) das Gemisch aus Gas und Lösungsmittel und die als Kühlmittel verwendete entspannte Lösungsmittelphase im Gegenstrom strömen lässt.

3. Verfahren nach einem der Ansprüche 1 bis 2, **dadurch gekennzeichnet, dass** man wenigstens einen Teil der aus der Stufe (c) stammenden gasförmigen Phase G₁, bevorzugt mittels Entspannung, durch eine Turbine (T₁) kühlt und ihn in die Wärmeaustauscherzone schickt, um das Gemisch aus Gas und Lösungsmittel zu kühlen.

4. Verfahren nach einem der Ansprüche 1 bis 3, **dadurch gekennzeichnet, dass** man am Austritt aus der Stufe (e) eine erste gasförmige Fraktion von der flüssigen Lösungsmittelphase S durch Entspannung und/oder Erwärmung abtrennt, um die Lösungsmittelphase an Bestandteilen A anzureichern.

5. Verfahren nach einem der Ansprüche 1 bis 4, **dadurch gekennzeichnet, dass** man bei einer Austrittstemperatur der Stufe (b) zwischen -20°C und -100°C arbeitet.

6. Verfahren nach einem der Ansprüche 1 bis 4, **dadurch gekennzeichnet, dass** man wenigstens die Stufen (b), (c), (d) und (e) während mehrerer Vorgänge wiederholt, die in Kontaktzonen i realisiert wurden, wobei die gasförmige Phase G₁, die am Austritt aus der Kontaktzone i erhalten wurde, zur folgenden Kontaktzone i + 1 geschickt wird und die gasförmige an Bestandteilen angereicherte Phase G₂ zur vorhergehenden Kontaktzone i - 1 geschickt wird.

7. Verfahren nach einem der Ansprüche 1 bis 6, zur Behandlung eines wenigstens ein saures Gas enthaltenden Gases, **dadurch gekennzeichnet, dass** die Gasphase G₁ an Bestandteilen verarmt ist, die wenigstens eines der sauren Gase wie Kohlendioxid CO₂ oder Schwefelwasserstoff H₂S umfassen, und dass man als Lösungsmittel S im Gemisch mit dem zu behandelnden Gas ein physikalisches Lösungsmittel wie einen Alkohol, wie Methanol oder Ethanol, einen Ether wie Methylpropylether, Ethylpropylether, Methyl-tert-butylether oder auch Propylencarbonat oder Methoxyethanol verwendet.

8. Verfahren nach einem der Ansprüche 1 bis 6, zur Behandlung eines Gases, das wenigstens Wasserstoff und Stickstoff umfasst und wo die vom behandelten Gas abgetrennte Fraktion wenigstens einen Kohlenwasserstoff wie Methan, Ethan, Propan, Butan und/oder Pentan umfasst und das zu behandelnde Gas wenigstens Wasserstoff und Stickstoff umfasst.

9. Verfahren nach einem der Ansprüche 1 bis 8, zur Behandlung eines wenigstens Wasser aufweisenden Gases, **dadurch gekennzeichnet, dass**
a. man ein mit Wasser mischbares Lösungsmittel wie Methanol verwendet, bevor man die Stufe (a) oder (b) durchführt,
b. man dieses zu behandelnde Gas in eine erste Fraktion F₁ und eine zweite Fraktion F₂ trennt,
c. man in einer Kontaktzone C₃ und im Gegenstrom eine Fraktion der flüssigen Lösungsmittelphase S₁, die aus der Stufe (b) stammt, mit wenigstens der ersten Fraktion F₁ des zu behandelnden Gases kontaktiert, indem man aus dieser Kontaktzone C₃ ein mit Lösungsmittel beladenes Gas abzieht und das mit an Lösungsmittel beladene Gas dann mit der zweiten Fraktion F₂ vermischt und zur Stufe (a) geschickt wird und
d. man aus dieser Kontaktzone C₃ eine wässrige im Wesentlichen von Lösungsmittel befreite Phase extrahiert.

## Claims

1. A treating process for processing a gas G comprising one or more constituents A to be separated, wherein the following stages are performed:
(a) the gas to be processed G is mixed at least partly with a solvent S selected to retain selectively at least one of the constituents to be separated, said solvent S resulting at least partly from stage (f),
(b) the mixture of gas G and of solvent S is cooled by circulating in at least one heat exchange zone so as to obtain, at the outlet of said heat exchange zone, at least a gas phase G₁ depleted in at least one of the constituents A to be separated and a solvent phase S₁ enriched in constituents to be separated,
(c) said enriched solvent phase S₁ is separated from said gas phase G₁,
(d) said enriched solvent phase S1 resulting from stage (c) is expanded in order to obtain an expanded solvent phase,
**characterized in that** the following stages are performed :
(e) said expanded solvent phase being recycled to the heat exchange zone in order to cool said gas-solvent mixture (stage b), said solvent phase S₁ consisting, at the outlet of the heat exchange zone, of at least a gas phase G₂ enriched in constituents A to be separated and of a liquid solvent phase S, and
(f) the gas phase G₂ and the liquid solvent phase S from stage (e) are separated and the solvent phase at least partly freed of constituent(s) to be separated is recycled to stage (a).

2. A process as claimed in claim 1, **characterized in that** the gas-solvent mixture and the expanded solvent phase used as a refrigeration agent are circulated in a countercurrent flow during stage (b).

3. A process as claimed in any one of claims 1 and 2, **characterized in that** at least part of the gas phase G₁ from stage (c) is cooled, preferably by expansion through a turbine (T1), and fed into the heat exchange zone in order to cool the gas-solvent mixture.

4. A process as claimed in any one of claims 1 to 3, **characterized in that** a first gas fraction is separated at the end of stage (e) from the liquid solvent phase S by expansion and/or by heating in order to enrich the solvent phase in constituents A.

5. A process as claimed in any one of claims 1 to 4, **characterized in that** the operating temperature at the end of stage (b) ranges between -20°C and -100°C.

6. A process as claimed in any one of claims 1 to 5, **characterized in that** stages (b), (c), (d) and (e) at least are repeated during several operations performed in contact zones i, the gas phase G₁ obtained at the outlet of contact zone i being fed into the next contact zone i+1 and the gas phase G₂ enriched in constituents being fed into the previous contact zone i-1.

7. A process as claimed in any one of claims 1 to 6, for processing a gas comprising at least one acid gas, **characterized in that** gas phase G₁ is depleted in constituents comprising at least one acid gas such as carbon dioxide CO₂ or hydrogen sulfide H₂S, and **in that** the solvent S used and mixed with the gas to be processed is a physical solvent such as an alcohol, for example methanol or ethanol, an ether such as methylpropylether, ethylpropylether, methyltertiobutylether, or propylene carbonate or methoxyethanol.

8. A process as claimed in any one of claims 1 to 6 for processing a gas comprising at least hydrogen and nitrogen and wherein said fraction separated from the processed gas comprises at least one hydrocarbon such as methane, ethane, propane, butane and/or pentane, the gas to be processed comprising at least hydrogen and nitrogen.

9. A process as claimed in any one of claims 1 to 9 for processing a gas comprising at least water, **characterized in that**:
- a water-miscible solvent such as methanol is used and before steps a) or b) to be realized,
- said gas is separated in a first fraction F1, and a second fraction F2,
- a fraction of the liquid solvent phase S₁ from stage (b) is brought into contact, in a countercurrent contact zone (C₃), with at least said first fraction F₁ of the gas to be processed, by withdrawing from said contact zone (C₃) a gas loaded with solvent, said gas loaded with solvent being thereafter mixed with said second fraction F₂ and sent to stage (a), and
- from said contact zone (C₃) an aqueous phase substantially freed of solvent is withdrawn.
